Europäisches Patentamt

European Patent Office

Office européen des brevets

(19)

(11) Publication number: **0 380 037**
**A2**

(12) # EUROPEAN PATENT APPLICATION

(21) Application number: **90101247.6**

(51) Int. Cl.5: **F24F 3/16, B60H 3/00**

(22) Date of filing: **22.01.90**

(30) Priority: **23.01.89 US 300121**
**13.06.89 US 365670**

(43) Date of publication of application:
**01.08.90 Bulletin 90/31**

(84) Designated Contracting States:
**AT BE CH DE DK ES FR GB GR IT LI LU NL SE**

(71) Applicant: **AMERICAN ENVIRONMENTAL SYSTEMS, INC.**
**4699 Nautilus Court**
**Boulder Colorado 80301(US)**

(72) Inventor: **Yehl, James E.**
**3160 Nebo Road**
**Boulder, Colorado 80302(US)**
Inventor: **Coppom, Rex R.**
**3068 Fulton Circle**
**Boulder, Colorado 80301(US)**

(74) Representative: **Baillie, Iain Cameron et al**
**c/o Ladas & Parry Isartorplatz 5**
**D-8000 München 2(DE)**

(54) **Apparatus and method for establishing selected environmental characteristics.**

(57) An apparatus and method for establishing selected environmental characteristics in a substantially enclosed area is disclosed for removal of undesired matter therefrom while establishing selected predetermined desired environmental characteristics therein. The apparatus includes units for negative ion production and positive electrostatic field establishment positioned relative to each other so that field generators are adjacent to, and spaced a preselected distance from, ion generators to enhance more even distribution of the positive electrostatic field and negative ions within the enclosed area and particularly adjacent to units and structural surfaces, the electrostatic field establishing unit including a field collector and pulse generating circuitry for pulsating the positive electrostatic field at a selected frequency. The apparatus includes controls for selectively controlling ion output, field strength, and/or field pulsation frequency. The apparatus may include its own structure establishing the substantially enclosed area, such structure being capable of being equipped with a fluid directing and conditioning system, full spectrum lighting, structural and/or occupant grounding and/or a supplemental source of free oxygen.

EP 0 380 037 A2

# APPARATUS AND METHOD FOR ESTABLISHING SELECTED ENVIRONMENTAL CHARACTERISTICS

## Field of the Invention

This invention relates to environmental control apparatus and methods and, more particularly, relates to apparatus and methods for establishing selected environmental characteristics in an enclosed area.

## Background of the Invention

Devices for ameliorating certain adverse characteristics of interior environments and for enhancing the well being of occupants thereof are known and have heretofore included, for example, means for generating ions and for purification of air (see for example U.S. Patent Nos. 4,542,434, 4,528,612, 4,493,247, 4,271,452, 3,662,217, 1,167,053, and Re. 27,027).

Devices are also known for provision of an electrostatic field, and/or for establishing disturbances, or pulses, in an electrostatic field within such environments (see for example U.S. Patent Nos. 4,271,452, 3,894,852, 3,680,281, 3,678,337, 3,662,217, 3,541,390, 3,531,150, 3,483,672, 2,184,644, 1,167,053, and Re. 27,027), with one such known arrangement including provision of a plurality of units for modification of characteristics of an environment established by a cabinet, or chamber (see U.S. Patent No. 2,184,644).

Indoor, or enclosed, environments have long been believed to shield occupants thereof from naturally occurring and beneficial electric fields which exist near the earth from 50 to 750 volts per meter, a phenomenon known as the Faraday Cage Effect, as well as shielding the occupants from the pulsed resonance within such naturally occurring fields (commonly referred to as the Schumann Resonance). Pulsating fields are believed to have positive effects on humans and have a frequency typically in a range between 7 Hz and 32 Hz (and more commonly between 7 Hz and 10 Hz) and are now also believed to accelerate particle movement within an environment. It is also believed that some such environments become ion depleted, and are, therefore, particularly susceptible to accumulation of gaseous and particulate pollutants.

It has also been suggested that provision in an enclosed environment of negative ions may stimulate biochemical reactions and/or increase the metabolic rate of those breathing the ions, and may also reduce production of the hormone serotonin that is believed to be associated with depression and fatigue. (See Yaglow, C.P., "Are Air Ions a Neglected Biological Factor?" pp 269-279, in "The Air We Breathe - A Study of Man and His Environment", Farber, S.M. and Wilson, R.H.L. Editors, Charles C. Thomas, Publisher, Springfield, IL (1961); Soyka, Fred, "The Ion Effect", E.E.P. Dutton Publisher (1977); Assael M., Pfeifer, Y., Sulman, F.G., "Influence of Artificial Air Ionization of the Human Electroencephalogram", Department of Applied Pharmacology, Hebrew University - Hadassah Medical School and School of Pharmacy, Jerusalem, Israel (1973); and Kreuger, A.P., Strubbe, A.E., Yost, M.G. and Reed, E.J. "Electric Fields, Small Air Ions and Biological Effects" Department of Biomedical and Environmental Health Sciences and the Naval Biosciences Laboratory, School of Public Health, Earl Warren Hall, University ·of California, Berkely, California (1976).)

While environmental modification devices heretofore known have been provided for use in enclosed areas, such devices have not effectively provided a single installation having apparatus capable of ameliorating a plurality of adverse environmental conditions experienced in enclosed environments and/or providing a combination of enhancements to the environment, have not recognized the value of an apparatus which is selectively controllable to maximize the beneficial effects thereof, and have often been cumbersome and/or unduly complicated to install, in many cases requiring multiple installations and/or extensive modification of the interior of an area where such devices are to be utilized. As may be appreciated, therefore, further improvements could be utilized.

## Summary of the Invention

This invention provides an apparatus and method for establishing selected environmental characteristics in a substantially enclosed area (for example rooms, chambers and/or helmets, or head gear, worn by occupants and operators of land and sea vehicles, aircraft, spacecraft and the like), to thereby promote removal of undesired matter from the area while more nearly establishing predetermined naturally occurring environmental characteristics therein to thus enhance the utility of the area including the performance, well being and/or integrity of equipment, materials, operators and occupants of the enclosed environment.

The apparatus includes a negative ion generator, an electrostatic field generator and, in one embodiment, preferably includes a plurality of negative ion output sources and positive field collectors, with the ion output sources and field collectors being selectively positioned relative to one another to maximize the efficiency of the apparatus. The field generator includes a field pulsator, with one or all of the generators and the pulsator preferably being controllable and positioned to selectively determine the quantity, or concentration, and point of discharge of negative ions, the strength and distribution of the electrostatic field, and/or the frequency of the pulsations in the electrostatic field to thus promote a substantially constant voltage and polarity within the enclosed area so that charge differentials between units such as surfaces, devices, inhabitants and the like, and undesired matter, such as dust, particulates and the like, are minimized.

The electrostatic field generating unit includes a field collector preferably having a removable collector surface constructed, for example, of electroconductive carbon foam material, glass having an electroconductive coating on one surface, electroconductive elastomers or the like. Provision of such a collector surface enables a user to remove matter collected thereat for laboratory analysis thereof to thus determine, for example, the content of undesired matter introduced into and/or produced within the enclosed area.

The apparatus may further include its own structure for establishing a substantially enclosed area which may be permanently installed or be movable between different locations, and which is advantageously provided with various systems for modification of interior environments including fluid directing and fluid conditioning devices providing, for example, ventilation, humidity and/or temperature controls and intake fluid filtration, for example using high efficiency particulate air (HEPA) and/or activated carbon charcoal type filters. Utilization of full spectrum illumination fixtures and/or a supplemental source of free oxygen may be desired for some installations, and occupant and/or structural grounding where desired, may be provided.

It is therefore an object of this invention to provide an improved apparatus and method for selective conditioning of predetermined characteristics of substantially enclosed areas.

It is another object of this invention to provide an improved apparatus and method for selectively conditioning enclosed environments by providing negative ions, a positive electrostatic field, and electrostatic field pulsations within the environment.

It is still another object of this invention to provide an apparatus and method for selective environmental conditioning of enclosed areas by provision of negative ions, a positive electrostatic field grid and electrostatic field pulsations within the area, with the positions of negative ion and positive field generation being selected to maximize even distribution of negative ions and the positive field within the area.

It is still another object of this invention to provide an apparatus and method for selectively conditioning substantially enclosed environments which provides the user with the capability of selecting the quantity of negative ion output, the strength of the electrostatic field, and the frequency of the pulsations within the electrostatic field.

It is yet another object of this invention to provide an apparatus and method for selective conditioning of preselected characteristics of a substantially enclosed utilization area which provides for generation of negative ions and a pulsed positive electrostatic field within the area, with a plurality of positions in the area for generation thereof being selected so that a substantially constant polarity and voltage is maintained within the area to thereby minimize charge differentials between structural elements, units such as equipment, work surfaces and occupants, and undesired matter to thus condition the area for collection and removal of the undesired matter while more nearly establishing predetermined naturally occurring environmental characteristics therein.

It is still another object of this invention to provide an improved apparatus for selective modification of selected characteristics of a substantially enclosed area which includes a chamber establishing the substantially enclosed area and which may include apparatus for illumination thereof configured to inhibit introduction into the chamber of selected electromagnetic signals while substantially simulating natural sunlight therein, a source for supplementing the free oxygen content of air within the enclosed area, fluid directing and conditioning units for circulation of air in the chamber and including means for regulating the temperature and humidity of air within the chamber and/or structure for grounding the chamber and/or occupants thereof.

With these and other objects in view, which will become apparent to one skilled in the art as the description proceeds, this invention resides in the novel construction, combination, arrangement of parts and method substantially as hereinafter described, and more particularly defined by the appended claims, it being understood that changes in the precise embodiment of the herein disclosed invention are meant to be included as come within the scope of the claims.

Brief Description of the Drawings

The accompanying drawings illustrate complete embodiments of the invention according to the best mode so far devised for the practical application of the principles thereof, and in which:

FIGURE 1A is a perspective view of a portable environmental control apparatus the control module of which is removably attachable at a preselected position in the interior of a vehicle, for example to the sun visor of an automobile, and illustrating use of the apparatus in an overall system including filtration of intake and/or recirculated air;

FIGURE 1B is a front elevation view of the control module shown in FIGURE 1A;

FIGURE 1C is a rear elevation view of the control module shown in FIGURE 1B shown in conjunction with the remotely positionable positive field collector used in the apparatus;

FIGURE 2 is a block diagram of the components of a first embodiment of the portable environmental control apparatus of FIGURE 1 which is operable from its own internal power source;

FIGURE 3 is a block diagram of a second embodiment of the environment control apparatus of FIGURE 1 operable from a 12 volt power supply system within the enclosed environment and including means for controlling the output of the apparatus;

FIGURE 4A is a schematic view of the components of a third embodiment of the environmental control apparatus operable from a conventional 115 volt AC power source;

FIGURE 4B is a schematic view of the pulsing unit of FIGURE 4A;

FIGURE 5 is a perspective view of the compact environmental control apparatus of this invention configured for use in association with a helmet worn by the operator of an aircraft;

FIGURE 6 is a sectional view of the helmet portion of the apparatus of FIGURE 5;

FIGURE 7 is a perspective view of a fourth embodiment of this invention utilized for selectively conditioning substantially enclosed areas such as a room;

FIGURE 8 is a perspective view of the control module portion of the apparatus illustrated in FIGURE 7;

FIGURE 9 is a block diagram of the components of the apparatus of FIGURES 7 and 8;

FIGURES 10A and 10B are schematic illustrations illustrating negative ion and positive electrostatic field distribution achieved by desired placement of the apparatus shown in FIGURE 7 in a room;

FIGURE 11 is a perspective view of a fifth embodiment of this invention illustrating an apparatus utilized for substantially enclosing an area and establishing selected environmental characteristics thereat;

FIGURE 12 is a sectional view taken through section lines 12-12 of FIGURE 11; and

FIGURE 13 is a partial elevation view particularly illustrating the illumination units of the apparatus illustrated in FIGURE 11.

## Description of the Invention

A first embodiment of the invention 15 is shown in FIGURES 1A through 1C. In FIGURE 1A, apparatus 15 is shown releasably attached to sun visor 17 of automobile 19 using clip 21. Clip 21 is affixed to the housing 23 of environmental control apparatus module 25, which housing contains the electronic circuitry (preferably micro-circuits) for producing negative ions at electrodes 27 and 29 (typically needle electrodes which are conventionally mounted in housing 23) and the pulsed, positive electrostatic field emanating from field collector 31. The overall module 25 is compact, typically being, for example, approximately 4 inches long, 3 1/3 inches wide and 1 inch thick.

Apparatus 15 is connected to the 12 volt battery of automobile 19 through the cigarette lighter housing 33 using interface 35, herein comprising lighter adapted plug 37 for linking the 12 volt supply to the circuitry of module 25 through cord 39.

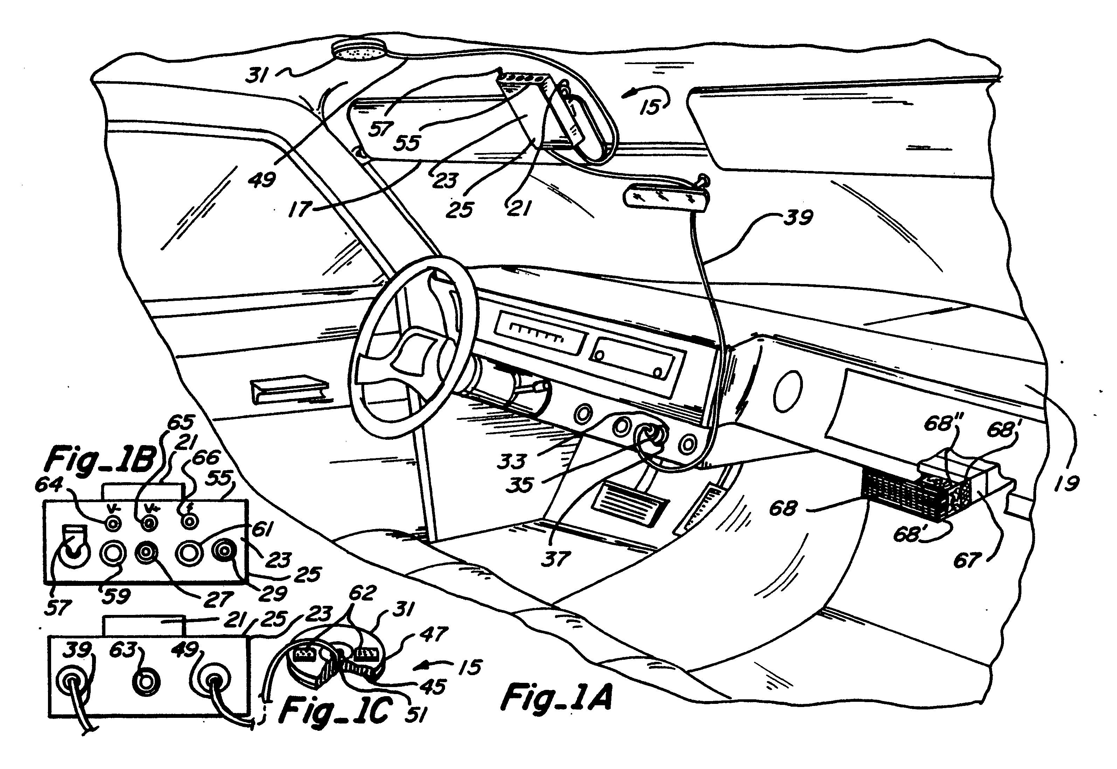

Positive field collector 31, as shown in FIGURE 1C, includes electroconductive carbon foam surface 45 within insulating dish housing 47, and maintained therein, for example, by nonconductive adhesive gel. Electroconductive carbon foam surface 45 may be, for example, Ensolite CEC by Uniroyal. Collector 31 is connected to module 25 by signal supply lead 49 for coupling the voltage signal from the microcircuitry of module 25 to electroconductive carbon foam surface 45 through electrode 51.

While module 25 is shown herein attached to the existing 12 volt battery of an automobile, it should be realized that the apparatus could make use of a variety of existing power sources in a variety of vehicles (for example land, marine, and air craft), and/or could make use of its own 12 volt battery pack as more fully set forth hereinbelow. In addition, while a 12 volt source is herein specified, it will be realized by those skilled in the art that the apparatus could be modified for use with power sources having different output voltages.

Housing 23 of apparatus 15 includes at the forward surface 55 thereof, on/off control 57, operational indicator lights 59 and 61 (indicator light 59 indicating that the ion generator is operational, and indicator light 61 indicating that the positive pulsed field is operational), as well as the negative ion generation electrodes 27 and 29.

By providing a module and field collector which may be selectively positionable within the particular enclosed environment, the point of generation of negative ions may be advantageously positioned to maximize intake of negative ions by a user of the device, and positioning of the positive field collector may also be advantageously selected for maximum effectiveness, for example above the head of the operator (or passenger) (using, for example, strips of the trademarked product Velcro 62 attached to dish housing 47). In addition, provisions may optionally be made for grounding of the operator and/or occupants, if desired.

If a more permanent positioning of the positive field collector 31 is desired, the field collector may be permanently installed (by use of screws, adhesives or the like) with cord 39 provided with a jack for attachment to a mating jack located in housing 23. In addition, an additional outlet receptacle 63 for provision of an additional, remote ion electrode may be provided in module housing 23. Hand-manipulable control knobs 64, 65 and 66 (as shown in FIGURE 1B) may be provided at the forward surface 55 of housing 23 for adjustment of negative ion output, positive electrostatic field strength, and the frequency of pulsations provided within the field respectively (as described hereinbelow).

Air intake and/or recirculation ducts (for example duct 67) may have filters (for example filter 68) positioned therein to thereby provide filtering of particulates and gases otherwise present in the environment. The filter system is preferably a combination of a 0.3 micron high efficiency particulate air (HEPA) filter 68' and an activated carbon charcoal filter 68".

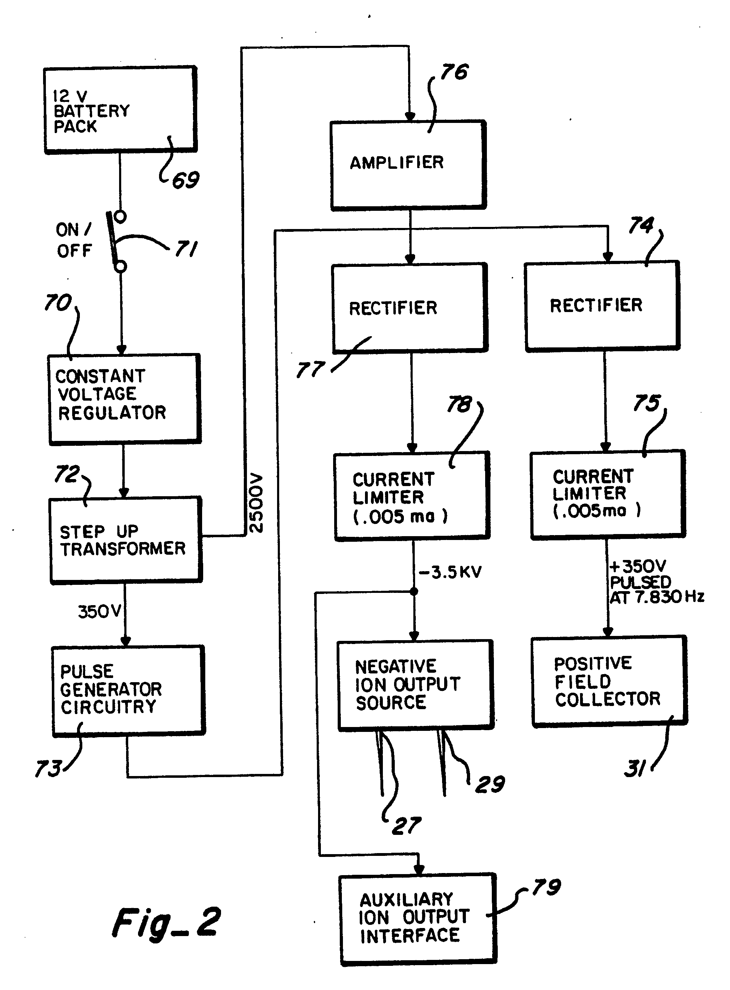

Turning now to FIGURE 2, one embodiment of a circuitry for apparatus 15 is shown, with the apparatus being operable from its own 12 volt battery pack 69. The +12 DC voltage supplied from battery pack 69 is received by constant voltage regulator 70 upon activation of on/off switching mechanism 71. Constant voltage regulator 70 (for example a 12 volt Zener diode) provides a steady +12 volt signal which is received by DC step-up transformer 72, the secondary coil of which is center tapped, providing a 350 volt signal at one output and a 2,500 volt signal at the other output. The 350 volt signal is received by pulse generator 73 the output signal of which is pulsed at a frequency of about 7.830 Hz. Pulse generator 73 is connected with rectifier 74. The positive portion of the pulsed 350 volt signal is thereafter received at current limiter 75 for limiting the current of the signal to about 0.005 mA at positive field collector 31.

The 2500 volt signal from step-up transformer 72 is received at amplifier 76 where the signal is amplified providing a 3.5 KV signal which is rectified at rectifier 77. The negative portion of the signal is received at current limiter 78 (limiting signal current to 0.005 mA) and thereafter at electrodes 27 and 29 as well as auxiliary ion output interface 79.

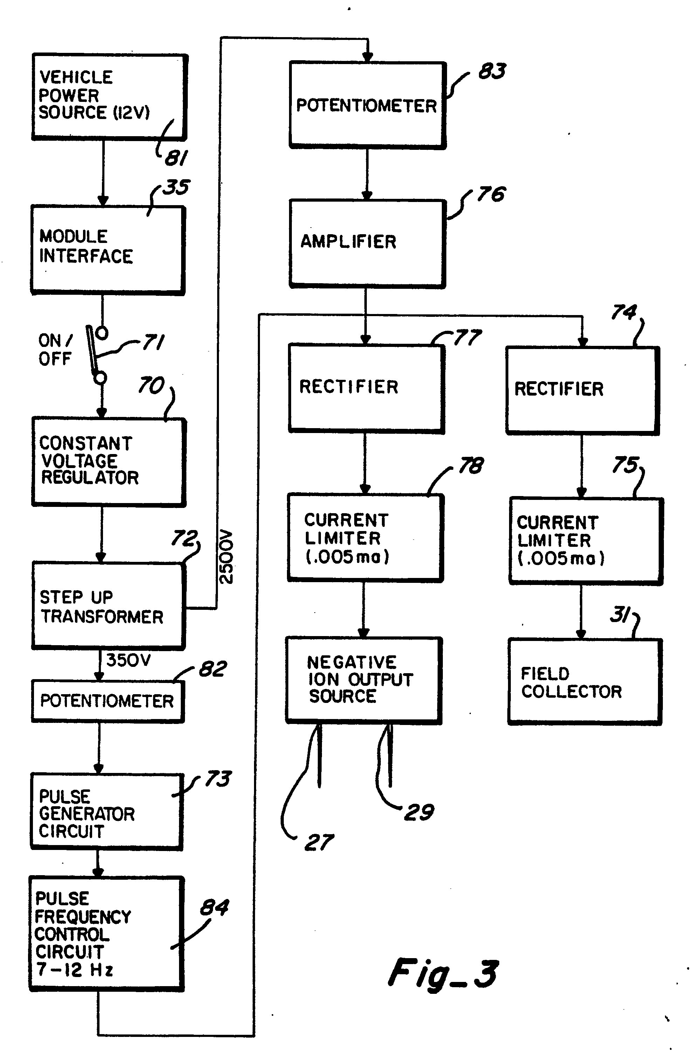

A second embodiment of the circuitry of apparatus 15 is shown in FIGURE 3 and includes interface 35 attachable to a 12 volt power source 81 already existing within the particular enclosed environment. As indicated in FIGURE 3, the DC signal provided at interface 35 is coupled through switch 71 and constant voltage regulator 70 to DC step-up transformer 72 which is connected with pulse generator circuitry 73 and amplifier 76 as was previously described in FIGURE 2. However, the output signals from transformer 72 are connected to potentiometers 82 and 83, potentiometer 82 allowing user regulation of the intensity of the electrostatic field produced at field collector 31, preferably within a range from 0 to 350 volts, and potentiometer 83 allowing control over voltage supplied to the negative ion output sources 27 and 29 in a range from 1.5 KV to 3.5 KV thereby allowing user regulation of the quantity of negative ions produced at the electrodes.

Pulse frequency control circuit 84 is connected between pulse generator 73 and potentiometer 83 for providing user control of the frequency of the pulses within the electrostatic field in a range from 7 to 32 Hz (preferably from 7 Hz to 12 Hz), which range corresponds with the naturally occurring pulsations in the electrostatic field surrounding the earth commonly referred to as the Schumann resonance. It is now believed that the preferable setting however will provide pulsation frequency of about 7.83 Hz.

While user controls for control of ion output, electrostatic field strength and frequency of field pulsations are shown in FIGURE 3, it should be realized that control over less than all of the above parameters may be desirable in any particular embodiment of the invention, those parameters without such user control being set for a predetermined output in a desirable range as heretofore discussed.

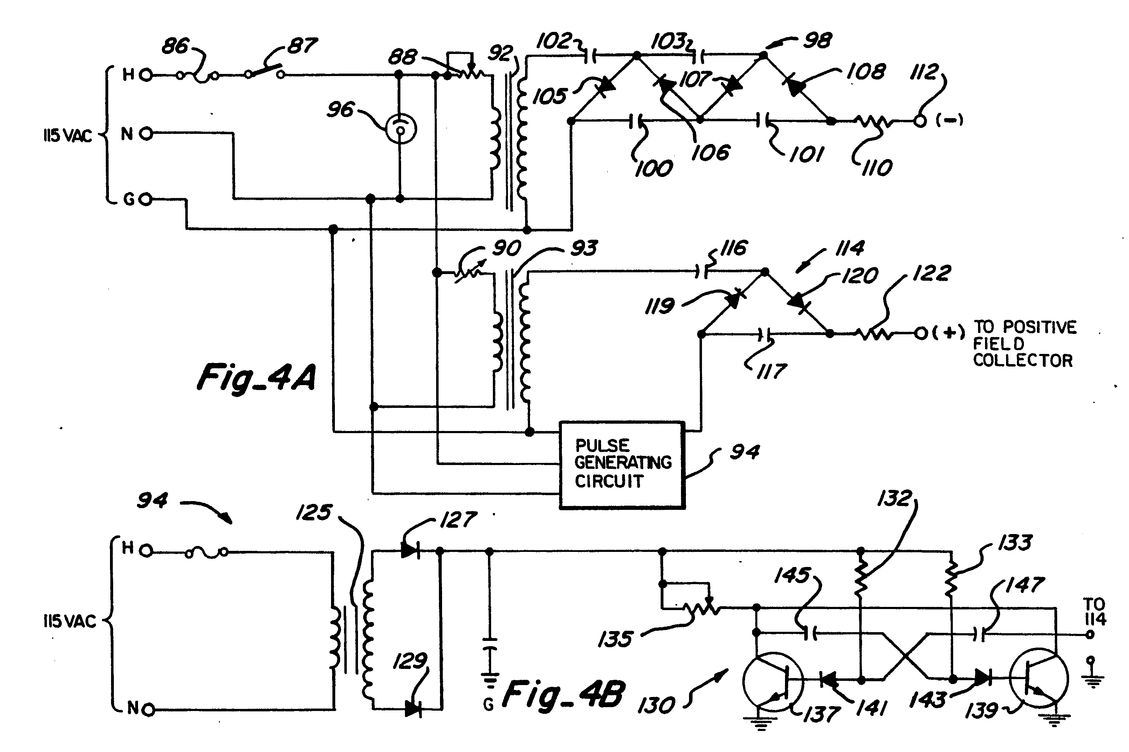

Referring now to FIGURES 4A and 4B, the circuitry for another embodiment of the apparatus is shown for use in association with a conventional 115 volt AC power supply. The 115 volt signal is coupled through fuse 86 and switch 87 to potentiometer 88 and variable resistor 90. Potentiometer 88 is connected to step-up transformer 92 for stepping the voltage up to 1200 volts. Variable resistor 90 is connected to step-up transformer 93 for separately stepping up the voltage output from the secondary coil thereof to 1000 volts. The 115 volt signal is also provided to pulse generating circuitry 94 for providing a pulsed output having a frequency of between 7 and 12 Hz (as more fully illustrated in FIGURE 4B). Indicator lamp 96 is provided for indicating operability of the apparatus upon closure of switch 87.

The output from transformer 92 is connected with amplifier and rectifier circuitry 98 for providing a rectified signal therefrom having a user controlled voltage of between 0 and -9 KV. Amplifier and rectifier circuitry 98 is a conventional circuit and includes capacitors 100, 101, 102 and 103, diodes 105, 106, 107 and 108 and resistor 110. The amplified and rectified voltage signal is supplied to negative ion output source 112 for adjustable negative ion output thereat.

The output from transformer 93 is connected to amplifier/rectifier circuitry 114, as is pulse generating circuitry 94. Amplifier and rectifier circuitry 114 includes capacitors 116 and 117 and diodes 119 and 120 in a conventional configuration, and is connected through resistor 122 to a positive field collector as previously set out herein. Variable resistor 90 enables user control over the intensity of the positive electrostatic field produced at the field collector in a range from 0 to +3.2 KV.

FIGURE 4B illustrates in detail adjustable frequency pulse generating circuitry 94 overall operation of which effectively establishes a ground interrupt system for establishing and regulating pulsations in the positive electrostatic field. The 115 volt AC signal is received at step-up transformer 125 (preferably producing an output matching that of transformer 93) the opposite sides of the secondary coil of which are connected to diodes 127 and 129 for full wave rectification of the signal. The DC output from the diodes is connected to pulse producing circuit 130 which includes resistors 132 and 133 and potentiometer 135. The DC signal is received at the bases of transistors 137 and 139 through resistors 132 and 133 and diodes 141 and 143, and is received at the collectors of transistors 137 and 139 through potentiometer 135 (for control over frequency of pulsations). The emitters of transistors 137 and 139 are connected to ground. Capacitor 145 is connected between the collector of transistor 137 and the junction of the base of transistor 139 (through diode 143) and resistor 133. The out signal from circuit 130 is received at amplifier/rectifier circuitry 114 through capacitor 147.

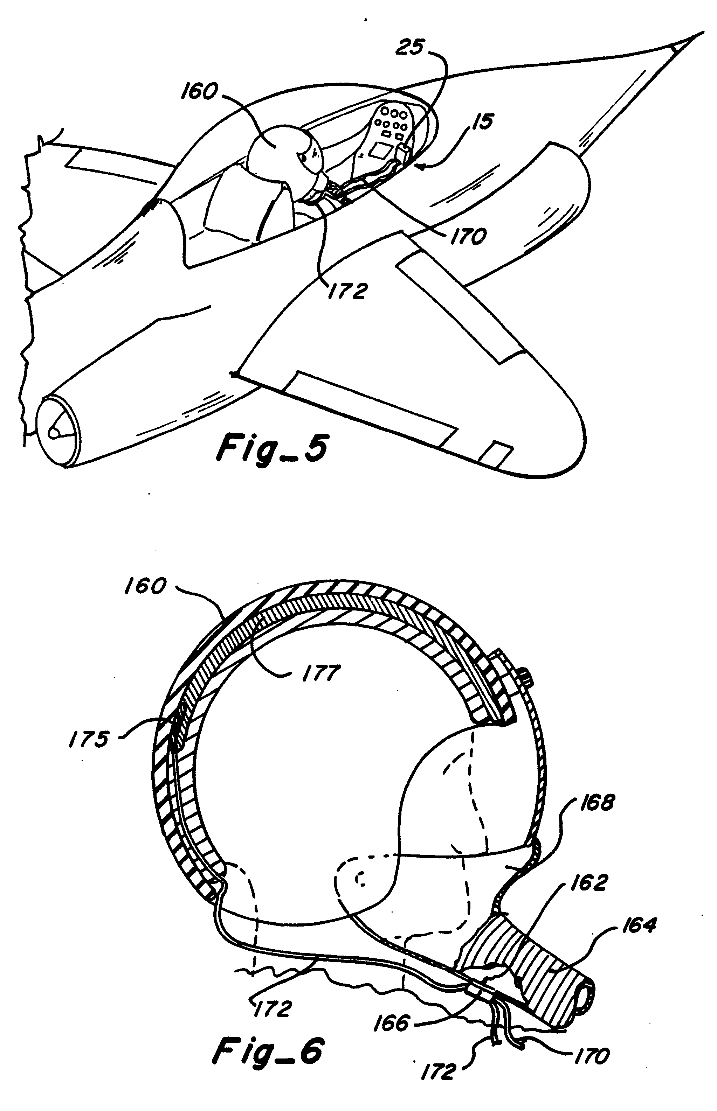

FIGURES 5 and 6 illustrate an embodiment of apparatus 15 wherein module 25 may include circuitry substantially similar to the circuitry shown in FIGURES 2 or 3. As shown in FIGURE 5, however, module 25 is used in connection with a protective head gear, for example helmet 160 (herein shown to be a helmet typical of those which may be used by aviators and the like).

As shown in FIGURE 6, helmet 160 is provided with negative ion electrode 162 adjacent air intake nozzle 164, with the electrode being provided in insulating housing 166. By provision of the negative ion output at the point of attachment of nozzle 164 to mask 168, the user of helmet 160 maximizes intake of negative ions. Of course, when the apparatus of this invention is used in association with a helmet having no such air intake system and/or face mask, the position of the negative ion output electrode may still be selectively located, as set forth in FIGURE 1 for example.

Signal supply line 170 is provided between electrode 162 and module 25. A second signal cord 172 from module 25 is provided at the rear of helmet 160 (and may include a jack and plug arrangement for disengagement of the line from the helmet) for connection to electrode 175 in electroconductive carbon foam surface 177. In this fashion, the positive electrostatic field is provided at the electroconductive carbon foam surface 177 within helmet 160. In other regards, the circuitry of module 25 is substantially similar to that shown in FIGURES 2 and 3, and provides for the output of negative ions and a positive electrostatic field which is pulsed within the 7 to 32 Hz range, and which may also include user controls for controlling the frequency of pulsations, the intensity of the electrostatic field, and the quantity of negative ion output.

FIGURE 7 illustrates a fourth, and now preferred, embodiment of this invention utilized for selectively conditioning substantially enclosed areas such as room 202, which may be an office, clean room, or the like. Apparatus 200 includes a plurality of negative ion generators 204 and positive electrostatic field generators 206. The negative ion generators each include a pair of electrodes 208 spaced approximately 24 inches apart, and the electrostatic field generators 206 include field collector surfaces 210, for example elongate electroconductive carbon foam collector surfaces similar to those heretofore discussed.

Control unit 212 is mounted on rear wall 214 of room 202, and each of the electrostatic field generators 206 and the negative ion generators 204 are mounted to ceiling 216 utilizing housings 218 and 220, respectively, including mounting rods 222 and 224 for mounting the units adjacent to but spaced a short distance from ceiling 216.

While it is desirable to have the units mounted on the ceiling, the units could be mounted on side walls 226 or rear wall 214 (as well as a front wall, not shown herein) although it is preferable for the negative ion generators to be ceiling mounted in most cases.

It has been found that when the generators are mounted a preselected distance apart (preferably from 3 to 7 feet [1-2 m] apart) and preferably with ion generators and electrostatic field generators being positioned alternately between side walls 226 and between rear wall 214 and the front wall, more even distribution of negative ions and the positive field is achieved providing a substantially constant voltage and polarity in the area thus minimizing charge differentials between structure (including walls, floors, equipment, work surfaces, people and the like) and undesired matter to be collected and removed from the room.

It has been found that positioning generators 204 and 206 closer than about 3 feet results in undesired field effects thereby reducing the concentration, and thus cleaning effect, of negative ions throughout an area, while a greater distance than about 7 feet between the units reduces the performance level of the apparatus by again negatively effecting the concentration and even distribution of ions in the field and thereby extending the period required for collection of undesired matter from the area (such as particulate matter, dust, processing by-products, and the like).

When installing the units in an area, a background reading of the ions and particulate matter to be removed in the 5 micron to .001 micron (00.1 x $10^{-6}$ m) range is taken. Once the level of such particulates present in the area is known, the unit is calibrated to produce the desired concentration of negative ions and positive field strength, and the generators are installed in selected positions to achieve the desired evenness of distribution of the negative ions and positive electrostatic field within the area. For example, given a constant voltage, it is desirable for generators to be positioned more closely (for example, at 3 foot [1m] intervals) where there is a higher concentration, or more hazardous variety, of particulates to be removed, while the units would be spaced more widely (toward the 7 foot [2m] spacing) where less concentration of negative ions at some predetermined distance from the generators is desired, such as in offices and the like. Of course, concentration at given spacing within the range can be varied by adjusting the voltage at the outputs of the generators, the spacing of the generators or combination thereof.

When the apparatus is positioned as above described, a substantially constant polarity and voltage is selectively maintained within the area thus minimizing charge differentials between the various structural units in the area, equipment, people and the matter which is to be removed from the area. Particulates and other matter to be removed, having a smaller mass, will, upon exposure to the negative ions, attach to the ions within the positive field and be attracted to the positive field collectors 210. The particulates are felt to become polarized in this manner so that the negatively charged portion of the particles maintain an orientation toward the positive field collector surface, and in fact may form chain-like structures between themselves, thus further enhancing their movement toward the positive field collector.

As heretofore discussed, the positive field produced by the positive field generators is pulsed in the 7 to 10 Hz range, preferably at 7.83 Hz, with each of the pulsations having an intensity of approximately 150 to 200 volts (again simulating naturalistic ionic cavity field resonance). It is felt that the pulsations in the positive electrostatic field assist in exciting atomic and molecular motion and thus movement of the particles toward the positive electrostatic field collector surfaces 210. Furthermore, since the voltage pulsations are small relative to the overall positive voltage produced at the collector of the electrostatic field generator, substantially constant voltage is still selectively maintained in the area.

In addition, the overall beneficial effects heretofore set forth of reducing the so-called Faraday cage effect and reproducing more naturally occurring fields found within the earth's ionic cavity, thus offsetting the 50 to 60 Hz syndrome found in modern architecture, are provided, thus providing many of the same benefits to inhabitants of the area.

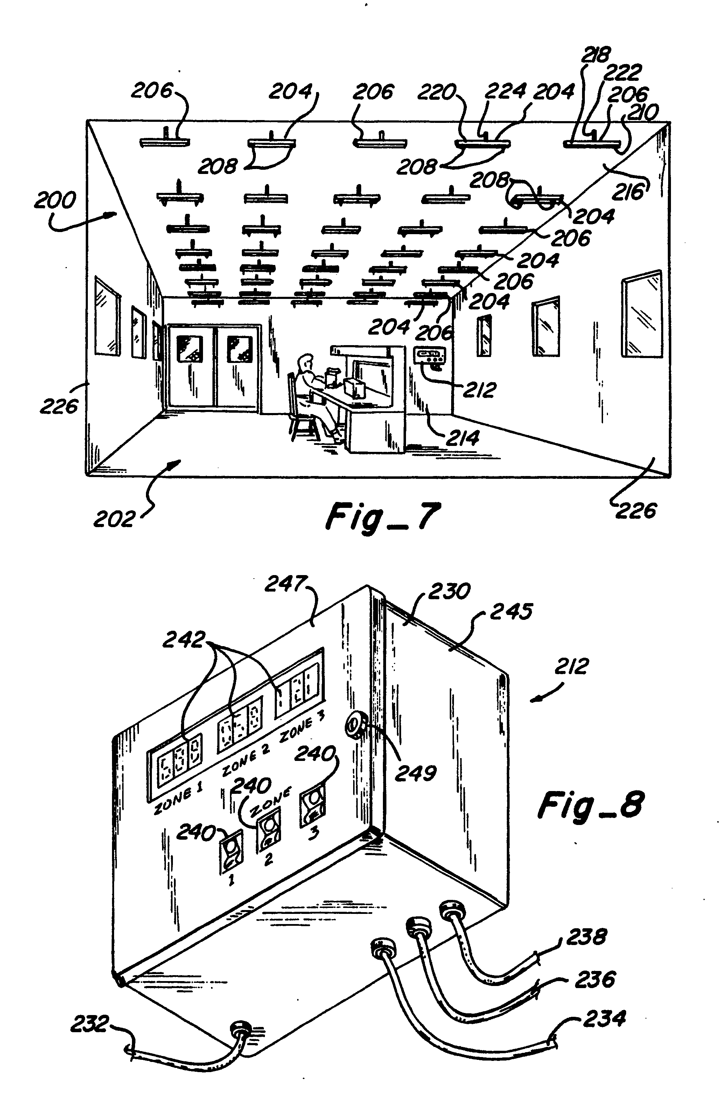

FIGURE 8 illustrates control unit 212 including control unit housing 230, power supply cord 232, zone supply cables 234, 236 and 238, zone on/off switches 240 and zone indicators 242. The different zone switches, indicators and supply cables are provided so that ion production and electrostatic field generation can be controlled in different parts of an area while other areas are left uneffected (it being understood that only a single zone may be desirable in any given case, and that all of the zones, where multiple zones are provided, are controlled by the same internal circuitry).

Housing 230 includes wall mountable housing portion 245 and door unit 247 having a lock 249 therein for tamper free maintenance of door 247 on portion 245. While not shown herein, control unit 212 includes, within the housing, adjustment mechanisms for adjusting the quantity of negative ion output, strength of the positive electrostatic field and frequency of pulsations in the electrostatic field, as was set forth heretofore.

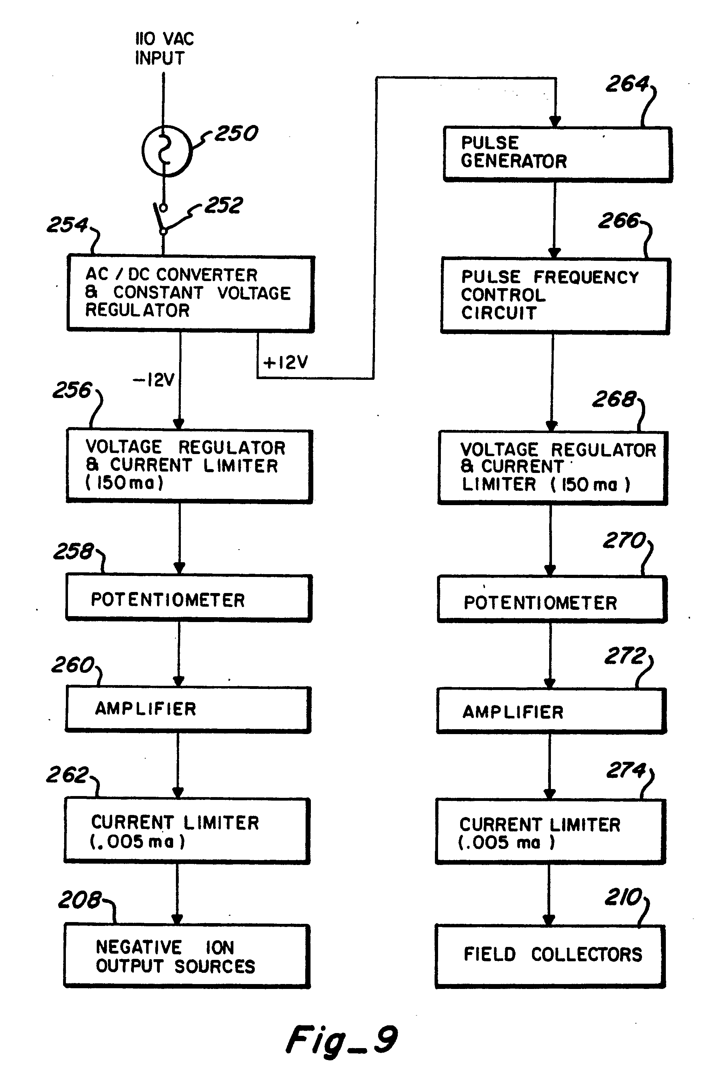

FIGURE 9 is a block diagram illustrating the circuitry to be found within control unit 212. The unit is connected to a 110 volt AC power source and includes fuse 250 (for example a 1/2 amp fuse) and on/off switch 252. The 110 volt AC signal is coupled through fuse 250 and switch 252 with the input of AC to DC converter and constant voltage regulator 254, for example a POWER-ONE, Inc. HB12-1.7A AC to DC converter and constant voltage regulator unit, which provides a -12 volt DC and a +12 volt DC signal at its output.

The -12 volt signal output is connected to the input of voltage regulator and current regulator 256 for limiting the output signal amperage to 150 ma with an output voltage of 6 to 12 volts, depending on the particular application.

Potentiometer 258 is provided to adjust voltage to thus allow a user of the apparatus to control the quantity of ions output by the device (in a range from 500 to 5,000,000 negative ions per cubic centimeter, with the ions being in the .001 micron range). The signal is then amplified by amplifier 260 (for example a Murata Erie Company 7700-694-000 amplifying unit) and presented at current limiter 262 for limitation of current to .005 ma (as heretofore set forth) before coupling of the output signal to negative ion output sources, or electrodes, 208.

The + 12 volt signal from AC to DC converter and constant voltage regulator 254 is provided at the input to pulse generator circuitry 264 which is connected to pulse frequency control circuit 266 (as previously discussed heretofore) for providing frequency controllable pulsations in the positive field. The signal from pulse frequency control circuit 266 is provided at the input of voltage regulator and current limiter 268 for regulating the voltage at 6 or 12 volts, as desired, and limiting the current to 150 ma.

The signal at the output of voltage regulator and current limiter 268 is coupled with the input of potentiometer 270 to provide user control over the intensity of the positive electrostatic field in a range between 0 and 18 kilovolts at the output of amplifier 272 (amplifier 272 being, for example, a Murata Erie 7700-327-000 amplifier). Amplifier 272 is connected to current limiter 274 for limitation of the current to .005 ma (current limiters 262 and 264 being substantially similar). The output signal therefrom is then coupled with field collectors 210.

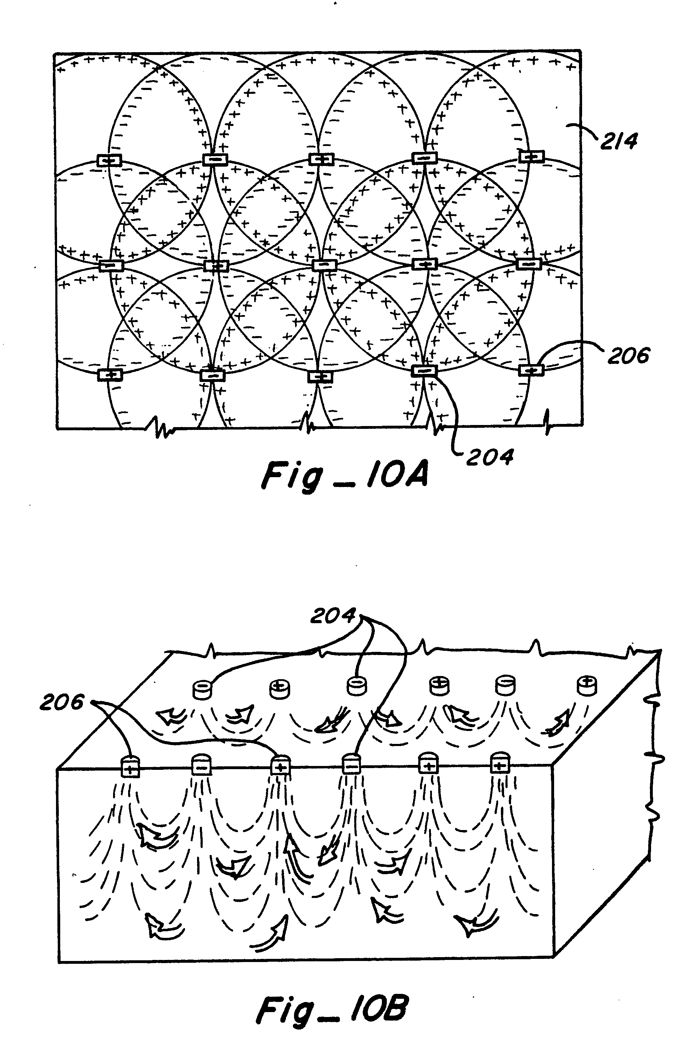

FIGURES 10A and 10B are schematic illustrations of the distribution of ions within an area such as room 214, and illustrate the conical distribution of the negative ions and positive fields within the room (as shown in FIGURE 10B) and the overlap of the zones of influence of the positive electrostatic fields and negative ion distribution radii to thus achieve an overall even distribution in the area of both the positive electrostatic field and negative ions.

In FIGURE 11 a fifth embodiment of this invention is illustrated for use in association with enclosures. While the enclosure and related system illustrated in FIGURE 11 is preferred for use with enclosures utilized for athletic training facilities, medical and dental operatories, and the like, it should be realized that fewer than all of the additional features illustrated in FIGURE 11 may be utilized in any particular embodiment, for example for utilization in vacuum chambers, helmets and head gear, free standing clean room facilities, and the like.

Such an enclosure system may be used for isolation of hospital patients, for example patients suffering from asthma, cardiac conditions, stroke, or burn, medical and dental operatory rooms, clean rooms, isolated chemical laboratories, athletic training chambers, or various testing chambers wherein isolation of materials or equipment is desirable, for example for containment, collection and analysis of matter related to utilization and function of various machines, processes, materials and the like. While not specifically shown in FIGURE 11, or described hereinbelow, additional known equipment could usefully be positioned in such a chamber arrangement (for example known gas analysis equipment for analyzing the makeup of gaseous fluids introduced into or produced within the chamber).

As shown in FIGURE 11, chamber, or enclosure, 300 (which may be either a permanent installation or a portable installation) is provided having a plurality of structural members 302, wall members 304, ceiling members 306 and floor member 308, the chamber being made accessible to users thereof through entryway, or door 310.

Frame members 302 can be constructed, for example, of extruded anodized aluminum, with wall and ceiling members being constructed of scratch resistant, low conductivity polycarbonate material or a combination of such material and an outer glass shell, the overall construction of the chamber being configured to enclose and thus virtually isolate, or segregate, the interior area thereof from the overall environment surrounding the chamber (for example, with the wall members and frame members and door members being provided with seals to prevent leakage of contaminated air therethrough). The various structural members are joined to form chamber 300 utilizing known techniques (for example fitting of wall, ceiling and floor members into channel structures of the frame members, or utilizing known fasteners such as rivets, screws or the like).

Within chamber 300, is positioned negative ion generator 204 as heretofore described (a plurality may be used depending upon the size of the chamber) and positive electrostatic field collectors 312 (similar in many regards to field collectors 206, 175/177 and 31 heretofore described). Fluid inlet structure 314 is provided for movement of air therethrough from duct 315 (which may be rigid or flexible ducting) and fluid directing, circulating and conditioning apparatus 316 to thereby provide fresh air into the chamber. Return opening 318 is provided for return of air through duct 320 to apparatus 316 in a known fashion.

Structure 314 has provided therein filters 322 including a HEPA filter and activated carbon charcoal filters (as heretofore set forth with respect to FIGURE 1A) for filtration of undesired particle matter and gaseous elements present in air supplied to the interior of the chamber. Known full spectrum UV-A.B illumination units 324 and 326 are provided, such units typically simulating up to 94% of the suns natural radiation.

A supplemental source of free oxygen is provided at oxygen supply 328 through flow control valve 330 manipulable from within the chamber to thereby allow users of the chamber to supplement the content of free oxygen within the chamber. Apparatus 316 (which may be separately provided or be part of an existing system utilized conventionally for climate control of the overall environment surrounding chamber 300), in addition to air circulation unit 332, may include a standard heating unit 333, cooling unit 334 and humidifying unit 335 therein, such units being well known in the art, with the air circulation unit, heating, cooling and humidity units being connected to sensors and level regulators 336 at control panel 338 in a conventional fashion (including temperature and humidity regulator controls and fan speed control, for example, to provide for user regulation of the temperature, relative humidity and rate of air exchange within the enclosed area of chamber 300). Control panel 338 may, in addition, include an on/off control as well as lighting controls and controls for setting the levels of the positive electrostatic field intensity, quantity of ions produced, and frequency of pulsations established within the positive electrostatic field as heretofore set forth, and is in communication with the various units controlled thereby through conduits 340.

Overall operation and function of the field collectors and negative ion generators is substantially similar to the system illustrated in FIGURES 7, 8 and 9, with positioning of the units being selected to maximize the effects thereof as heretofore set forth.

The chamber may optionally include structural grounding for grounding the structure and/or occupants and equipment within the chamber, and floor 308 may in some cases desirably be constructed of electroconductive materials. Shielded and grounded power outlets, as well as other required utilities, may be provided within the chamber.

FIGURE 12 is a sectional view of one of the collectors 312 illustrating use of a removable collector surface 350 which may be constructed of electroconductive carbon foam pads (although other such removable collector surfaces could be utilized including, for example, glass having an electroconductive coated rear surface, known electroconductive plastics, or the like). Female collector plug 352 is provided for connection and disconnection to a male connector plug 354 in turn connected to a source of current for establishing the positive electrostatic field at the collector. The electroconductive carbon foam collector 350 is positioned in channel members 356 and 358 in collector housing 360 and is removable therefrom merely by lifting at one side to thus dislodge the opposing side from the channel to thereby allow disconnection of the plugs and removal of the carbon foam pad therefrom.

As heretofore set forth, in overall operation the carbon foam collector collects undesired particulate matter present in the chamber, and thus upon removal thereof from collector housing 360 may be utilized for analysis of the contaminants collected thereat. The electroconductive carbon foam pad, while being suitable for collection of such matter, is also well suited to washing, for example in deionized and distilled water or other suitable fluid, to thus remove matter collected at the collector surface. The collected contaminants and the fluid may then be centrifuged for separation of the collected matter, and analysis of the matter may then be undertaken to determine the makeup and nature thereof. Known laboratory analysis techniques, including microscopic analysis, scanning electron microscopy, spectral analysis, and resonance ionization spectroscopy, may be utilized depending on the nature of the analysis undertaken and the degree of certainty as to the relative makeup and character of the desired. Collector surface 350, may be replaced in housing 360 for further use thereof within the chamber after washing (and drying) thereof.

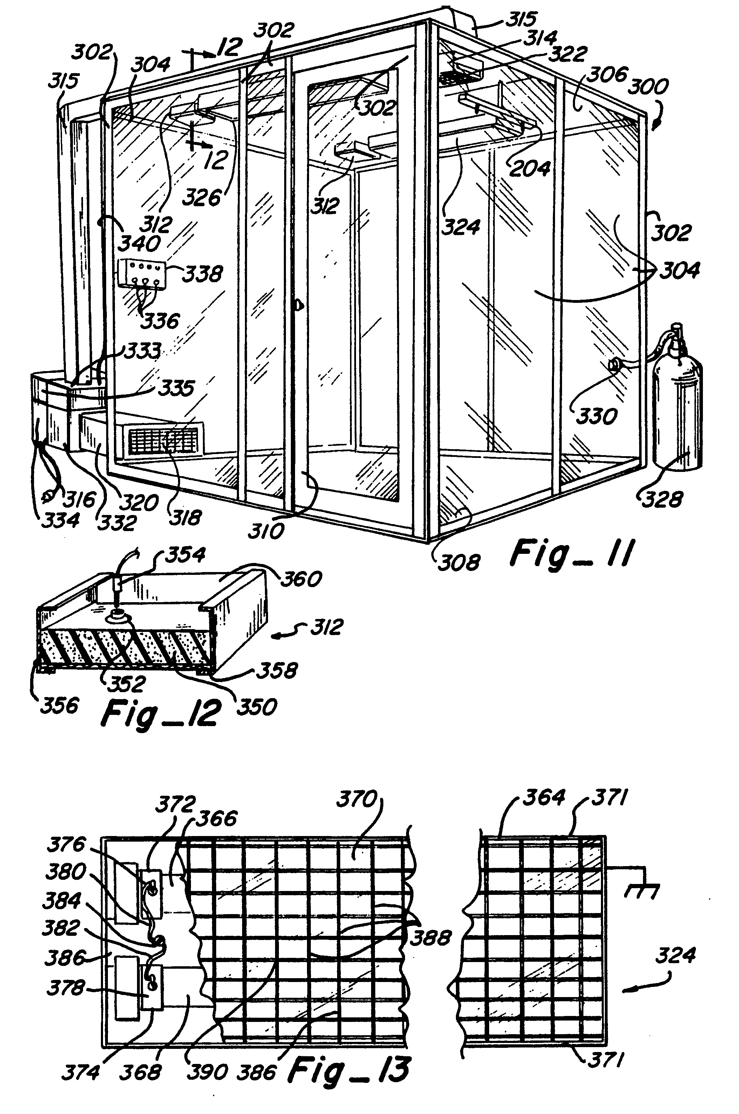

FIGURE 13 illustrates one of the illumination units (unit 324) providing further illustration of special shielding and defusing structures utilized therewith to prevent introduction into the chamber of undesired electromagnetic signals (particularly radio frequency and x-ray radiation which may be associated with normal operation of the illumination units). While not particularly illustrated herein, transformers, ballasts, and the like associated with the illumination units have been removed from the fixture itself and positioned outside of chamber 300 adjacent to ceiling members 306.

The illumination units include housing 364 having known full spectrum UV-A.B lamps 366 and 368 connected therein in a conventional fashion. An ultraviolet transmitting defuser 370 is positioned on channel retainers 371 at housing 364 for defusing light produced at lamps 366 and 368 into chamber 300. The housing is grounded in a conventional fashion.

At cathode ends 372 and 374 of lamps 366 and 368, respectively, shields 376 and 378, respectively, surround ends 372 and 374. The shields are preferably lead shields, or alloys thereof, and may be formed into either a tape-like material or a fabricated collar configuration. The shields have ground wires 380 and 382 connected thereto for connection to ground screw 384 at rear wall 386 of housing 364 to thus shield and ground the cathode ends of the fixtures to inhibit introduction of radio frequency radiation into the chamber.

Further protection against introduction of radio frequency radiation into the chamber is provided by antenna 386 formed of a mesh of vertical and horizontal wires 388 and 390, respectively, the overall mesh being interconnected and grounded to housing 364. Antenna 386 is integrally formed in diffuser 370, but could also be a free standing antenna maintained on the rear surface thereof.

As may be appreciated from the foregoing, this invention provides an improved apparatus and method for selective environmental conditioning of substantially enclosed areas wherein an enclosure is provided having negative ions and a pulsed positive electrostatic field established therein to thereby promote removal of undesired matter, such as particulate matter, from the area while more nearly establishing predetermined natural occurring environmental characteristics therein, as well as selectively supplementing the environment thereof, to thus enhance the performance and well being of occupants and equipment therein, as well as allowing for monitoring and analysis thereof. The enclosures may be of any useful configuration and could include vacuum chambers (for example utilized for vapor deposition, plasma etching and/or sputtering processes), helmets or headgear worn by pilots or the like, isolation chambers, training chambers and/or medical and dental operatories or treatment facilities.

Conditioning of fluid (usually air) directed to the interior of the enclosure is provided, and a user of the enclosure maintains control within predetermined parameters of one or all of the quantity of negative ions generated, the intensity of, and frequency of pulsations in, the electrostatic field, the temperature and humidity of air introduced into the enclosure, the free oxygen content of air in the chamber and the rate of circulation of air through the chamber. Fluids (air) entering the enclosure are filtered to remove undesired particle and gaseous elements thereof. Specialized illumination units may be provided to simulate natural sunlight, with shields and defusers being provided to inhibit introduction into the enclosure of selected electromagnetic signals associated with normal operation of such units, and grounding systems may be provided, such as electroconductive flooring, for grounding the enclosure and/or occupants thereof.

## Claims

1. An apparatus for selective conditioning of preselected characteristics of a substantially enclosed utilization area having units therein to promote removal of undesired matter from the area while more nearly establishing predetermined naturally occurring environmental characteristics therein, said area being formed by structure having inwardly facing surfaces, said apparatus comprising:

negative ion generating means;

positive electrostatic field establishing means including field collector means positioned adjacent to, and spaced a preselected distance from, said negative ion generating means in said area, said positive field establishing means further including pulse establishing means for establishing pulsations having a selected frequency in said positive electrostatic field; and

control means for controlling said ion generating means and said electrostatic field establishing means so that electrostatic field intensity and the quantity of ions generated are selectable independent of one another.

2. The apparatus of claim 1 wherein said apparatus includes a plurality of negative ion generating means, each of said negative ion generating means being spaced a preselected distance from one another in said area.

3. The apparatus of either claim 1 or 2 wherein said positive electrostatic field establishing means includes a plurality of positive field collector means each of which is positioned adjacent to, and spaced a preselected distance from, said negative ion generating means in said area.

4. The apparatus of claims 1 through 3 wherein said control means includes quantity control means for controlling the quantity of negative ions generated by said negative ion generating means and intensity control means for controlling the intensity of the positive electrostatic field produced by said positive electrostatic field establishing means.

5. The apparatus of claims 1 through 4 wherein said control means includes frequency control means for controlling the frequency of said pulsations established in said positive electrostatic field by said pulse establishing means.

6. The apparatus of claims 1 through 5 wherein said preselected distance between said negative ion generating means and said field collector means of said positive electrostatic field establishing means is between about three feet and seven feet (one and two meters).

7. The apparatus of claims 2 through 6 wherein each of said plurality of negative ion generating means includes a plurality of electrodes for generating negative ions therefrom.

8. The apparatus of claims 3 through 7 wherein each of said positive field collector means of said positive electrostatic field establishing means includes an elongate electroconductive carbon foam collector surface.

9. The apparatus of claims 3 through 8 wherein said structure includes side wall structures and wherein said plurality of negative ion generating means and said positive field collector means of said positive electrostatic field establishing means each include mounting means for mounting said negative ion generating means and said positive field collector means adjacent to and spaced a short distance from said ceiling structure, said negative ion generating means and said positive field collector means being mounted so that said negative ion generating means and positive field collector means are alternately arranged between said side wall structures of said structure forming said area.

10. A method for selective conditioning of preselected characteristics of a substantially enclosed utilization area having units therein to promote removal of undesired matter from the area while more nearly establishing predetermined naturally occurring environmental characteristics therein, said area being formed by structure having inwardly facing surfaces, said method comprising: generating a selected quantity of negative ions within said area from a plurality of preselected spaced first positions in said area; generating a positive electrostatic field having a selected voltage in said area from at least one preselected second position in said area, said second position being adjacent to, and spaced a preselected distance from, each of said first positions; establishing pulsations having a selected frequency in said positive electrostatic field; and controlling said quantity of negative ions and said voltage of said positive electrostatic field independently of one another.

11. The method of claim 10 wherein the step of generating a positive electrostatic field includes generating said positive electrostatic field from a plurality of preselected spaced second positions in said area, each of said second positions being adjacent to, and spaced a preselected distance from, different ones of said first positions.

12. The method of either claim 10 or 11 wherein said structure forming said area includes ceiling structure and side wall structures, and wherein said first and second positions are adjacent to said ceiling structure, and wherein said first and second positions are alternately arranged between said side wall structures.

13. The method of claims 10 through 12 wherein said preselected distance is between about three feet and seven feet.

14. The method of claims 10 through 13 wherein said spaced first positions each include first and second spaced ion generating points, and wherein said second position has an elongate electrostatic field collector positioned thereat.

15. The method of claims 10 through 14 further comprising the step of independently controlling the frequency of said pulsations established in said positive electrostatic field.

16. The method of claims 10 through 15 wherein said selected frequency is between about 7 to 10 Hz.

17. An apparatus for establishing selected environmental characteristics comprising: means for establishing a substantially enclosed area; ion producing means for generating a selected quantity of ions of a preselected polarity within said substantially enclosed area; and electrostatic field establishing means for establishing an electrostatic field within said substantially enclosed area having a polarity opposite to said preselected polarity of said ions and having a selected field intensity, said field intensity and said quantity of ions produced being selectable independently of one another, said electrostatic field establishing means including pulse establishing means for pulsating said electrostatic field at a selected frequency.

18. The apparatus of claim 17 wherein said means for establishing a substantially enclosed area includes air intake structure and return air structure, and wherein said apparatus further comprises circulating means connected with said air intake and return air structures.

19. The apparatus of either claim 17 or 18 wherein said air intake structure includes at least one of a HEPA filter and an activated carbon charcoal filter for filtering air directed to said enclosed area by said circulating means.

20. The apparatus of claims 17 through 19 further comprising conditioning means for providing selectively controlled conditioning of air directed to said enclosed area by said circulating means, said selectively controlled conditioning including at least one of controlling the temperature and controlling the humidity of air in said enclosed area.

21. The apparatus of claims 17 through 20 further comprising oxygen supply means for selectively supplementing the free oxygen content of air within said enclosed area.

22. The apparatus of claims 17 through 21 wherein said apparatus further comprises illumination means for lighting said enclosed area, said illumination means configured to provide light which substantially simulates natural sunlight and including shielding and diffusing means to shield and diffuse selected electromagnetic signals associated with normal operation of said illumination means to thus inhibit introduction of said selected electromagnetic signals into said enclosed area.

23. The apparatus of claims 17 through 22 wherein said electrostatic field establishing means includes field collector means having a removable collector surface for collection thereat of undesired matter in said enclosed area, said collector surface being of a material suitable to allow removal therefrom of said matter collected thereat upon removal of said collector surface from said collector means.

24. The apparatus of claims 17 through 23 wherein said means for establishing said substantially enclosed area is a chamber at least partly constructed of materials characterized by low conductivity.

25. The apparatus of claim 24 wherein said chamber includes grounding means for grounding said chamber and occupants thereof.

26. A method for collecting and analyzing matter in a selected area comprising:

substantially enclosing said selected area;

producing a selected quantity of ions having a selected polarity in said area;

establishing an electrostatic field having a selected field intensity and in said area, said electrostatic field being established at a collector having a removable collector surface and being of a polarity opposite to said selected polarity of said ions, said field intensity and said quantity of ions produced being selectable independent of one another;

continuing to produce said ions and maintain establishment of said electrostatic field for a desired period of time sufficient to collect matter at said collector;

removing said collector surface from said collector;

removing said collected matter from said collector surface; and

performing selected analysis of said matter removed from said collector surface.

27. The method of claim 26 wherein said ions are negative ions and wherein said electrostatic field is a positive electrostatic field, the method further comprising pulsating said electrostatic field at a selected frequency at said collector.

Fig.-1A

Fig.-1B

Fig.-1C

Fig_2

| VEHICLE POWER SOURCE (12V) | *81* |
| MODULE INTERFACE | *35* |
| ON / OFF *71* |
| CONSTANT VOLTAGE REGULATOR | *70* |
| STEP UP TRANSFORMER | *72* |
| 350V |
| POTENTIOMETER | *82* |
| PULSE GENERATOR CIRCUIT | *73* |
| PULSE FREQUENCY CONTROL CIRCUIT 7 - 12 Hz | *84* |

2500V

| POTENTIOMETER | *83* |
| AMPLIFIER | *76* |
| RECTIFIER | *77* |
| CURRENT LIMITER (.005ma) | *78* |
| NEGATIVE ION OUTPUT SOURCE |
| *27*   *29* |

| RECTIFIER | *74* |
| CURRENT LIMITER (.005ma) | *75* |
| FIELD COLLECTOR | *31* |

*Fig_3*

Fig_4A

Fig_4B

EP 0 380 037 A2

Fig_5

Fig_6

*Fig_7*

*Fig_8*

IIO VAC INPUT

250

252

254 — AC / DC CONVERTER & CONSTANT VOLTAGE REGULATOR

264 — PULSE GENERATOR

266 — PULSE FREQUENCY CONTROL CIRCUIT

+I2V

−I2V

256 — VOLTAGE REGULATOR & CURRENT LIMITER (I50ma)

268 — VOLTAGE REGULATOR & CURRENT LIMITER (I50ma)

258 — POTENTIOMETER

270 — POTENTIOMETER

260 — AMPLIFIER

272 — AMPLIFIER

262 — CURRENT LIMITER (.005ma)

274 — CURRENT LIMITER (.005ma)

208 — NEGATIVE ION OUTPUT SOURCES

210 — FIELD COLLECTORS

Fig_9

*Fig _ IOA*

*Fig _ IOB*

*Fig_11*

*Fig_12*

*Fig_13*